# FASCICULE DE BREVET EUROPEEN

(11) **EP 2 697 781 B1**
(45) Date de publication et mention de la délivrance du brevet: **05.06.2019**
(21) Numéro de dépôt: 12722406.1
(22) Date de dépôt: 12.04.2012
(51) Int. Cl.: G07C 5/08, B64C 25/00, G01L 17/00

(54) **PROCEDE ET DISPOSITIF DE COMPTAGE DU NOMBRE D'ATTERRISSAGES D'UN PNEUMATIQUE D'UN AERONEF**
VERFAHREN UND VORRICHTUNG ZUR ZÄHLUNG DER ANZAHL DER LANDUNGEN EINES FLUGZEUGREIFENS
METHOD AND DEVICE FOR COUNTING THE NUMBER OF LANDINGS PERFORMED BY AN AIRCRAFT TYRE

(30) Priorité: 13.04.2011 FR 1101154
(43) Date de publication de la demande: 19.02.2014
(73) Titulaire: Compagnie Générale des Etablissements Michelin, 63000 Clermont-Ferrand (FR)
(72) Inventeur: FAGOT-REVURAT, Lionel, F-63040 Clermont-Ferrand Cedex9 (FR)
(74) Mandataire: Roussy, Delphine
(86) Numéro de dépôt international: PCT/FR2012/050798
(87) Numéro de publication internationale: WO 2012/140370

(56) Documents cités:
- EP-A1- 2 208 971
- EP-A2- 1 892 129
- FR-A1- 2 937 728
- US-A1- 2004 075 022
- US-A1- 2007 080 795
- US-A1- 2008 033 607

## Description

La présente invention concerne le domaine des pneumatiques pour aéronef.

L'usure d'un pneumatique d'un aéronef dépend du nombre d'atterrissages et de décollages qu'il subit. Le nombre d'atterrissages est égal au nombre de décollages.

D'une part, il est souhaitable, pour le manufacturier, de connaître ce nombre d'atterrissages ou de décollages afin de surveiller l'usure du pneumatique et apprécier la variation de la performance du pneumatique en fonction de l'usure de ce dernier. D'autre part, il est souhaitable, pour les différents acteurs intervenants sur l'aéronef (services de maintenance, services de contrôle, etc.) de pouvoir anticiper le changement ou le rechapage d'un pneumatique usé.

On connait du document FR 2 939 897 un procédé et un dispositif de comptage du nombre d'atterrissages d'un pneumatique pour aéronef. Le dispositif est fixé sur une surface interne du pneumatique. Le dispositif comprend un capteur et des moyens d'alimentation du dispositif, par exemple une pile. Le capteur comprend une bobine sensible aux variations temporelles de flux magnétique engendré par la rotation du pneumatique dans le champ magnétique terrestre ou dans un champ magnétique local généré par exemple par un aimant. La bobine génère alors un signal périodique dont la fréquence est égale à la fréquence de rotation du pneumatique. Au cours du procédé, on mesure la fréquence de rotation du pneumatique. Lorsque la fréquence de rotation franchit un seuil prédéterminé, c'est-à-dire lors d'une phase d'atterrissage ou de décollage, on incrémente le nombre d'atterrissages.

Toutefois, afin de mesurer la fréquence de rotation de la roue, le capteur mesure en continu le signal généré par la bobine, ce qui est très énergivore. Ainsi, compte tenu de sa consommation énergétique élevée, le dispositif a une durée de vie limitée à 2 ans avec une pile de capacité 550 mA.h et pesant 8 g. Il est donc nécessaire de changer les moyens d'alimentation à chaque rechapage. Pour éviter un changement des moyens d'alimentation à chaque rechapage, on peut augmenter la capacité des moyens d'alimentation ce qui en augmente inévitablement le poids. Cependant, l'augmentation du poids engendre un balourd trop important lors de la rotation du pneumatique à haute vitesse.

L'invention a pour but de fournir des dispositif et procédé de comptage moins énergivores.

A cet effet, l'invention a pour objet un procédé de comptage du nombre d'atterrissages d'un pneumatique d'aéronef, **caractérisé en ce qu'il** comprend les étapes du procédé de la revendication indépendante 1.

La consommation électrique d'un dispositif de comptage mettant en oeuvre le procédé selon l'invention est relativement faible. En effet, chaque mesure de la grandeur physique peut être effectuée de façon ponctuelle et non en continu comme il est nécessaire de le faire dans le procédé de l'état de la technique afin de déterminer la fréquence. Ainsi, grâce au procédé selon l'invention, on ne consomme de l'énergie qu'au moment de la mesure et pas entre chaque mesure.

Avantageusement, on déclenche une séquence de mesures de la grandeur physique lorsqu'on détecte une mise en mouvement du pneumatique. On limite ainsi la mesure de la grandeur aux seuls intervalles de temps pendant lesquels le pneumatique est en mouvement. La consommation énergétique est donc réduite. On arrête la séquence de mesure lorsque, suite à une mise en mouvement du pneumatique, on ne détecte plus aucun mouvement du pneumatique.

De préférence, l'indicateur est une variation temporelle de la grandeur physique sur un intervalle de temps prédéterminé. Ainsi, on utilise un indicateur pertinent sans nécessairement mesurer une valeur absolue de la grandeur physique car on peut s'affranchir d'éventuelles étapes d'étalonnages lors de l'initialisation du dispositif mettant en oeuvre le procédé. Enfin, il est sans importance que la grandeur physique soit ou non sensible aux conditions climatiques.

Selon une caractéristique du procédé, on mesure la grandeur physique à intervalles de temps réguliers. En choisissant un intervalle suffisamment court, on détecte relativement rapidement le dépassement du seuil. En choisissant un intervalle suffisamment long, on réduit la consommation énergétique car on diminue le nombre de mesure faites.

La grandeur physique est choisie parmi la température et la pression. De telles grandeurs physiques sont sensiblement indépendantes de l'environnement magnétique du pneumatique. Le procédé permet donc d'obtenir une mesure fiable de la grandeur physique quelque soit l'environnement magnétique contrairement à un procédé dans lequel on utiliserait une mesure d'un champ magnétique pour calculer l'indicateur.

L'invention a également pour objet un dispositif de comptage du nombre d'atterrissages d'un pneumatique d'aéronef, **caractérisé en ce qu'**il comprend les caractéristiques du dispositif de la revendication indépendante 4.

La consommation énergétique du dispositif selon l'invention est relativement faible. Si l'on souhaite éviter autant que possible le remplacement des moyens d'alimentation, une pile de capacité 550 mA.h et pesant 8 g permet d'obtenir une durée de vie du dispositif pouvant atteindre 12 ans. Ainsi, on peut conserver les mêmes moyens d'alimentation pendant toute la durée de vie de la carcasse, notamment pendant les différents rechapages, généralement cinq, que subit la carcasse du pneumatique. Si l'on souhaite privilégier l'allègement du dispositif tout en conservant une durée de vie limitée à 2 ans, le dispositif permet de réduire la capacité de la pile à 110 mA.h et donc la masse totale du dispositif d'environ 20 %.

Le dispositif comprend des moyens de détection d'une mise en mouvement du pneumatique et des moyens d'activation des moyens de mesure activables par les moyens de détection.

L'invention a également pour autres objets une valve, un pneumatique, une roue d'aéronef et un aéronef, chacun de ces objets étant **caractérisé en ce qu'**il comprend un dispositif tel que défini ci-dessus.

L'invention sera mieux comprise à la lecture de la description qui va suivre, donnée uniquement à titre d'exemple non limitatif et faite en se référant aux dessins dans lesquels :
- la figure 1 est une vue en coupe axiale d'un pneumatique selon l'invention;
- la figure 2 est un schéma fonctionnel d'un dispositif selon l'invention du pneumatique de la figure 1;
- la figure 3 illustre une courbe de variation, en fonction du temps, de la fréquence de rotation d'un pneumatique lors d'un cycle comprenant un décollage et un atterrissage et une courbe de variation, en fonction du temps, de la température de l'air contenu à l'intérieur d'un pneumatique lors de ce même cycle;
- la figure 4 illustre une variation, en fonction du temps, d'un signal de déclenchement de la mesure de la température par le dispositif de la figure 2;
- la figure 5 illustre des séquences de mesures de la température par le dispositif de la figure 2;
- la figure 6 illustre une courbe de variation, en fonction du temps, d'un indicateur relatif à la variation de la température mesurée de la figure 5.

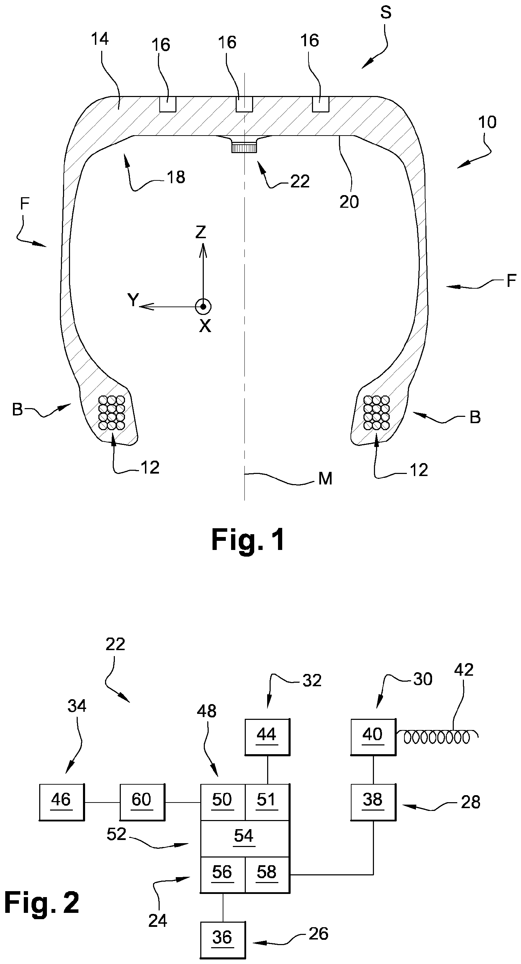

On a représenté sur la figure 1 un pneumatique selon l'invention désigné par la référence générale 10. Le pneumatique 10 est destiné à être montée sur une roue d'aéronef. Sur la figure 1, on a représenté des axes X, Y, Z orthogonaux entre eux correspondant aux orientations habituelles radiale (Z), axiale (Y) et circonférentielle (X) d'un pneumatique.

De façon classique, le pneumatique 10 comprend un sommet S prolongé par deux flancs F et deux bourrelets B. Deux tringles 12 sont noyées dans les bourrelets B. Les deux tringles 12 sont agencées symétriquement par rapport à un plan radial médian M du pneumatique. Chaque tringle 12 est de révolution autour d'un axe de référence. Cet axe de référence, sensiblement parallèle à la direction Y, est sensiblement confondu avec un axe de révolution du pneumatique. Le sommet S comprend une bande de roulement 14, munie de sculptures 16. Le pneumatique 10 comprend également une nappe de gomme intérieure étanche 18 s'étendant entre les deux tringles annulaires 12 du pneumatique 10 en passant par le sommet S. La nappe 18 présente une surface externe 20 au contact de l'air contenu à l'intérieur du pneumatique 10. Le pneumatique 10 comprend un dispositif 22 de comptage du nombre N d'atterrissages du pneumatique 10. Le dispositif 22 est fixé sur la surface externe 20, par exemple par collage.

Selon un mode de réalisation alternatif, le dispositif 22 peut aussi être fixé à une valve de roue.

On a représenté sur la figure 2 un schéma fonctionnel du dispositif 22. Le dispositif 22 comprend un micro-contrôleur 24 ainsi que des moyens 26 d'alimentation du dispositif 10 et des moyens 28 de stockage de données. Le dispositif 22 comprend des moyens 30 de communication des données stockées dans les moyens 28 vers l'extérieur. Le dispositif 22 comprend également des moyens 32 de détection de la mise en mouvement du pneumatique 10 et des moyens 34 de mesure discontinue d'une grandeur physique de l'air contenu à l'intérieur du pneumatique 10.

Les moyens d'alimentation 26 comprennent une pile 36 de capacité 550 mA.h et pesant 8 g. Les moyens de stockage de données 28 comprennent une mémoire 38 de type E2PROM. Les moyens de communication 30 comprennent un émetteur/récepteur 40 fonctionnant à 125 kHz et une antenne 42 apte à transmettre vers l'extérieur les données stockées dans la mémoire 38 en réponse à un signal de lecture d'un lecteur.

Les moyens de détection 32 comprennent un capteur 44 de rotation du pneumatique 10 et permettent de détecter la mise en rotation du pneumatique 10. Un tel capteur 44 est notamment décrit dans la demande de brevet publiée sous le numéro WO2004/110793.

Les moyens de mesure 34 permettent la mesure de la température T de l'air contenu à l'intérieur du pneumatique. Les moyens 34 comprennent par exemple un thermocouple 46, une sonde platine ou encore un capteur de température intégré.

Le micro-contrôleur 24 comprend des moyens 48 de comptage du temps comprenant une horloge 50 ainsi que des moyens 51 d'activation des moyens de mesure 34 activables par un signal D des moyens de détection 32. Le micro-contrôleur 24 comprend également des moyens 52 de détermination d'un indicateur I relatif à la grandeur physique, ici la température T de l'air contenu à l'intérieur du pneumatique 10. En l'espèce, il s'agit d'un calculateur 54. En outre, le micro-contrôleur 24 comprend des moyens 56 de comparaison de l'indicateur I à un seuil prédéterminé S associé au pneumatique 10. Enfin, le micro-contrôleur 24 comprend des moyens 58 d'incrémentation du nombre N d'atterrissages reliés au moyens de stockage de données 28.

Les moyens 34 comprennent des moyens 60 de synchronisation entre le thermocouple 46 et l'horloge 50 afin que chaque mesure ponctuelle de la température T de l'air contenu à l'intérieur du pneumatique 10 soit faite à intervalle de temps réguliers.

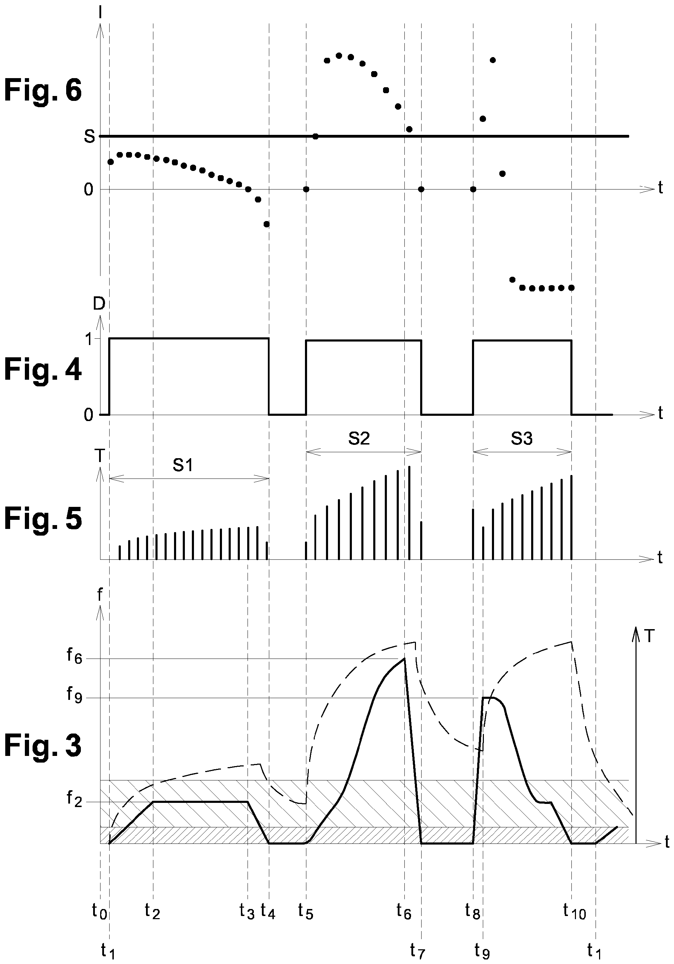

On va maintenant décrire les principales étapes d'un procédé selon l'invention en référence aux figures 3 à 6.

On a représenté sur la figure 3 une courbe de variation, en fonction du temps, de la fréquence F de rotation d'un pneumatique lors d'un cycle comprenant un décollage et un atterrissage (courbe en trait continu) et une courbe de variation, en fonction du temps, de la température de l'air contenu à l'intérieur d'un pneumatique lors de ce même cycle (courbe en traits pointillés).

L'intervalle de temps entre les temps t₀ et t₁ correspond à une phase de stationnement. L'aéronef est immobile sur un emplacement de stationnement. La fréquence f est donc nulle et la température T constante et égale à la température de l'air ambiant.

L'intervalle de temps entre les temps t₁ et t₄ correspond à une phase de roulage. Entre les temps t₁ et t₂, l'aéronef quitte son emplacement de stationnement et accélère jusqu'à atteindre une vitesse constante correspondant à la fréquence de rotation f2. Comme le roulage du pneumatique sur la piste échauffe ce dernier, la température T augmente progressivement. Entre les temps t₂ et t₃, l'aéronef se déplace à vitesse constante sur la piste pour rejoindre la piste de décollage. La température T continue à augmenter progressivement. Entre les temps t₃ et t₄, l'aéronef décélère progressivement pour se positionner en bout de piste pour le décollage. Au temps t₄, il est immobile et prêt à décoller. La température T diminue suite à l'arrêt de l'aéronef.

Entre les temps t₄ et t₅, l'aéronef reste immobile en bout de piste en attendant l'ordre de décollage qui intervient au temps t₅. La température T continue de diminuer jusqu'au temps t₅.

L'intervalle de temps entre les temps t₅ et t₆ correspond à une phase de décollage. L'aéronef accélère brusquement pour atteindre sa vitesse de décollage correspondant à une fréquence de rotation f6. La température T augmente également plus rapidement.

L'intervalle de temps entre les temps t₆ et t₈ correspond à une phase de vol. Entre les temps t₆ et t₇, la rotation du pneumatique ralentit rapidement pour s'arrêter en t₇. En raison de l'inertie thermique de l'air contenu à l'intérieur du pneumatique, la température continue à augmenter sur une partie de l'intervalle entre t₆ et t₇. Entre les temps t₇ et t₈, le train d'atterrissage étant rentré, le pneumatique est immobile ce qui correspond à une fréquence f nulle. La température T diminue en raison de l'immobilité du pneumatique mais également en raison de la température très basse de l'air environnant le pneumatique.

L'intervalle de temps entre les temps t₈ et t₉ correspond à une phase d'atterrissage. L'aéronef atterrit au temps t₈. Brusquement, le pneumatique accélère pour atteindre la vitesse d'atterrissage de l'aéronef en t₉ correspondant à la fréquence de rotation f9. La température T augmente également rapidement.

L'intervalle de temps entre les temps t₉ et t₁₀ correspond à une phase de roulage. L'aéronef décélère progressivement pour atteindre son emplacement de stationnement où il s'arrête. La fréquence f est alors nulle au temps t₁₀. En raison de l'inertie thermique de l'air contenu à l'intérieur du pneumatique, la température continue à augmenter sur une partie de l'intervalle entre t₉ et t₁₀ avant de diminuer suite à la diminution de la fréquence de rotation du pneumatique.

On a représenté sur la figure 4 un signal D de détection de la mise en mouvement du pneumatique 10 émis par les moyens 32. Lorsque le pneumatique 10 est dans un état immobile dans lequel sa fréquence de rotation est nulle, le signal D prend la valeur 0. Lorsque le pneumatique 10 est en mouvement, sa fréquence de rotation est non-nulle et le signal D prend la valeur 1. Ainsi, le signal D prend la valeur 0 sur les intervalles de temps t₀-t₁, t₄-t₅, t₇-t₈ et t₁₀-t₁ et prend la valeur 1 sur les intervalles de temps t₁-t₄, t₅-t₇ et t₈-t₁₀.

On a représenté sur la figure 5 des séquences temporelles de mesures S1, S2, S3 de la température T de l'air contenu à l'intérieur du pneumatique 10 selon l'invention. On déclenche chaque séquence S1, S2, S3 de mesures lorsqu'on détecte une mise en mouvement du pneumatique 10, c'est-à-dire lorsque le signal de détection de la mise en mouvement prend la valeur 1. On débute la séquence S1 au temps t₁ et on l'interrompt au temps t₄. On débute la séquence S2 au temps t₅ et on l'interrompt au temps t₇. On débute la séquence S3 au temps t₈ et on l'interrompt au temps t₁₀. Dans chaque séquence S1, S2, S3, on mesure en discontinu la température T de l'air contenu à l'intérieur du pneumatique. En l'espèce, on mesure la température T à intervalles de temps réguliers, ici toute les 10 secondes.

On a représenté sur la figure 6 la courbe de variation d'un indicateur I relatif à la température T en fonction du temps. L'indicateur I est une variation temporelle de la température T sur un intervalle de temps prédéterminé Δt. L'intervalle de temps prédéterminé est ici l'intervalle de temps séparant deux mesures successives de la température T, soit 10 secondes. Ainsi, on effectue le calcul suivant toute les 10 secondes: I(t+Δt)= (T(t+At)-T(t))/At.

Au cours de chaque séquence S1, S2, S3, on détermine l'indicateur I relatif à la température sur chaque intervalle de temps prédéterminé Δt. On compare chaque indicateur I calculé à un seuil prédéterminé S associé au pneumatique.

Si l'indicateur I est supérieur au seuil prédéterminé S, on incrémente le nombre d'atterrissages N de 1. Si l'indicateur I est inférieur au seuil prédéterminé S, le nombre d'atterrissages N ne change pas. Tant que l'indicateur I ne redescend pas en dessous du seuil prédéterminé S, le nombre d'atterrissage N ne peut être incrémenté. Ainsi, comme illustré sur la figure 6, au cours d'un cycle comprenant un atterrissage et un décollage, l'indicateur I dépasse une première fois le seuil prédéterminé S lors de la séquence S2 de mesures correspondant au décollage de l'aéronef peu après le temps t₅ et redescend en dessous du seuil prédéterminé S lors de cette même séquence S2 peu après le temps t₆. Puis, l'indicateur I dépasse une deuxième fois le seuil prédéterminé S lors de la séquence S3 de mesures correspondant à l'atterrissage de l'aéronef peu après le temps t₈ et redescend en dessous du seuil prédéterminé S lors de cette même séquence S3 après le temps t₉. Ainsi, lors d'un cycle comprenant un atterrissage et un décollage, on incrémente deux fois le nombre N.

L'invention ne se limite pas au mode de réalisation précédemment décrit.

Ainsi, dans un autre mode de réalisation, la grandeur physique de l'air contenu à l'intérieur du pneumatique mesurée est la pression.

Entre autres avantages, le dispositif selon l'invention peut être installé sur un pneumatique comprenant un dispositif tel que décrit dans la demande publiée sous le numéro WO 2004/110793 en modifiant ce dernier. Le dispositif selon l'invention utilise uniquement la fonction de détection de la mise en mouvement du pneumatique du dispositif de cet état de la technique pour déclencher la mesure de la grandeur. Le dispositif selon l'invention n'utilise pas la fonction de mesure en continu des variations temporelles du flux magnétique pour déterminer la fréquence de rotation du pneumatique car celle-ci est trop énergivore. Ainsi, on peut utiliser la fonction de détection de la mise en mouvement du pneumatique du dispositif déjà existant pour adapter le dispositif selon l'invention sur des pneumatiques déjà en service. Ainsi, même si l'environnement magnétique du dispositif est perturbé par des sources magnétiques d'origines non naturelles, ces sources magnétiques ne sont pas suffisamment intenses pour perturber la détection de la mise en mouvement du pneumatique d'un dispositif de l'état de la technique modifié conformément à l'invention. Cette détection permet de déclencher la mesure de la grandeur physique qui n'est sensible à aucune perturbation magnétique.

## Revendications

1. Procédé de comptage du nombre (N) d'atterrissages ou de décollage d'un pneumatique (10) d'aéronef, **caractérisé en ce qu'il** comprend les étapes suivantes :
- après avoir détecté la mise en rotation du pneumatique, on mesure à intervalles de temps (Δt) réguliers. la température ou la pression de l'air contenu à l'intérieur du pneumatique (10);
- on détermine au moins un indicateur (I) relatif à la variation de la température ou de la pression sur l'intervalle de temps (Δt) considéré (I(t+Δt)= (T(t+At)-T(t))/Δt);
- on compare l'indicateur (I) à un seuil prédéterminé (S) associé au pneumatique (10), et
- si l'indicateur (I) est supérieur au seuil prédéterminé (S) associé au pneumatique (10) puis repasse en-dessous dudit seuil prédéterminé (S), on incrémente le nombre (N) d'atterrissages ou de décollages .

2. Procédé selon la revendication précédente dans lequel l'intervalle de temps entre deux mesures est sensiblement égal à 10 secondes.

3. Procédé selon l'une quelconque des revendications précédentes dans lequel, on arrête de mesurer la température ou la pression à intervalles réguliers lorsque l'on détecte un arrêt de la rotation du pneumatique.

4. Dispositif (22) de comptage du nombre (N) d'atterrissages et de décollages d'un pneumatique (10) d'aéronef, **caractérisé en ce qu'il** comprend :
- des moyens de détection (32) de la mise en rotation du pneumatique, et des moyens (51) d'activation des moyens de mesure (34) activables par les moyens de détection (32),
- des moyens (34) de mesure de la température ou de la pression (T) de l'air contenu à l'intérieur du pneumatique (10) à intervalles réguliers;
- des moyens (52) de détermination d'un indicateur (I) relatif à la variation de température ou de pression sur l'intervalle de temps (Δt) considéré (I(t+Δt)= (T(t+Δt)-T(t))/Δt);
- des moyens (56) de comparaison de l'indicateur (I) à un seuil prédéterminé (S) associé au pneumatique (10), et
- des moyens (58) d'incrémentation du nombre d'atterrissages et de décollages (N), lorsque l'indicateur (I) est supérieur à un seuil prédéterminé (S) associé au pneumatique puis repasse en-dessous dudit seuil prédéterminé (S).

5. Dispositif selon la revendication 4, dans lequel les moyens de mesure de la température ou de la pression (34) sont activés sensiblement toutes les 10 secondes pendant une période de temps comprise entre la mise en rotation du pneumatique et l'arrêt de la rotation du pneumatique.

6. Pneumatique (10), **caractérisé en ce qu'**il comprend un dispositif (22) selon l'une quelconque des revendications 4 ou 5.

7. Roue d'aéronef, **caractérisée en ce qu'**elle comprend un dispositif (22) selon l'une quelconque des revendications 4 ou 5.

8. Aéronef, **caractérisé en ce qu'**il comprend un pneumatique (10) selon la revendication 6 ou une roue selon la revendication 7.

9. Valve, **caractérisée en ce qu'**elle comprend un dispositif (22) selon l'une quelconque des revendications 4 ou 5.

## Patentansprüche

1. Verfahren zur Zählung der Anzahl (N) von Landungen oder Start eines Luftfahrzeugreifens (10), **dadurch gekennzeichnet, dass** es die folgenden Schritte umfasst:
- nachdem das Indrehungversetzen des Reifens erkannt wurde, wird in regelmäßigen Zeitabständen (Δt) die Temperatur oder der Druck der im Inneren des Reifens (10) enthaltenen Luft gemessen;
- es wird mindestens ein Indikator (I) bezogen auf die Abweichung der Temperatur oder des Drucks über den betrachteten Zeitabstand (Δt) bestimmt (I(t+At) = (T(t+Δt) - T(t))/Δt);
- der Indikator (I) wird mit einer vorbestimmten Schwelle (S) verglichen, die mit dem Reifen (10) in Verbindung steht, und
- wenn der Indikator (I) größer als die vorbestimmte Schwelle (S) ist, die mit dem Reifen (10) in Verbindung steht, dann wieder unter die vorbestimmte Schwelle (S) fällt, wird die Anzahl (N) von Landungen oder Starts inkrementiert.

2. Verfahren nach dem vorhergehenden Anspruch, wobei der Zeitabstand zwischen zwei Messungen im Wesentlichen gleich 10 Sekunden ist.

3. Verfahren nach einem der vorhergehenden Ansprüche, wobei das Messen der Temperatur oder des Drucks in regelmäßigen Abständen angehalten wird, wenn ein Halt der Drehung des Reifens erkannt wird.

4. Vorrichtung (22) zur Zählung der Anzahl (N) von Landungen oder Starts eines Luftfahrzeugreifens (10), **dadurch gekennzeichnet, dass** sie Folgendes umfasst:
- Mittel zur Erkennung (32) des Indrehungversetzens des Reifens und Mittel (51) zur Aktivierung der Mittel zum Messen (34), die durch die Mittel zur Erkennung (32) aktivierbar sind,
- Mittel (34) zum Messen der Temperatur oder des Drucks (T) der Luft, die im Inneren des Reifens (10) enthalten ist, in regelmäßigen Abständen;
- Mittel (52) zur Bestimmung eines Indikators (I) bezogen auf die Temperatur- oder Druckabweichung über den betrachteten Zeitabstand (Δt) (I(t+Δt) = (T(t+Δt) - T(t))/Δt);
- Mittel (56) zum Vergleich des Indikators (I) mit einer vorbestimmten Schwelle (S), die mit dem Reifen (10) in Verbindung steht, und
- Mittel (58) zur Inkrementierung der Anzahl von Landungen und Starts (N), wenn der Indikator (I) größer als eine vorbestimmte Schwelle (S) ist, die mit dem Reifen in Verbindung steht, dann wieder unter die vorbestimmte Schwelle (S) fällt.

5. Vorrichtung nach Anspruch 4, wobei die Mittel zum Messen der Temperatur oder des Drucks (34) im Wesentlichen alle 10 Sekunden während eines Zeitraums, der zwischen dem Indrehungversetzen des Reifens und dem Halt der Drehung des Reifens liegt, aktiviert werden.

6. Reifen (10), **dadurch gekennzeichnet, dass** er eine Vorrichtung (22) nach einem der Ansprüche 4 oder 5 umfasst.

7. Luftfahrzeugrad, **dadurch gekennzeichnet, dass** es eine Vorrichtung (22) nach einem der Ansprüche 4 oder 5 umfasst.

8. Luftfahrzeug, **dadurch gekennzeichnet, dass** es einen Reifen (10) nach Anspruch 6 oder ein Rad nach Anspruch 7 umfasst.

9. Ventil, **dadurch gekennzeichnet, dass** es eine Vorrichtung (22) nach einem der Ansprüche 4 oder 5 umfasst.

## Claims

1. Method for counting the number (N) of landings or of takeoffs of an aircraft tyre (10), **characterized in that** it comprises the following steps:
- when the initiation of the rotation of a tyre (10) is detected. measurement of the temperature or the pressure of the air contained inside of the tyre (10) are performed at regular intervals of time (Δt);
- at least one indicator (I) relating to the variation of the temperature or the pressure on the regular interval of time (Δt) is determined by the equation I(t+Δt)= (T(t+Δt)-T(t))/Δt;
- the indicator (I) is compared with a predetermined threshold (S) associated with the tyre (10), and
- if the indicator (I) is greater than the predetermined threshold (S) associated with the tyre (10), then it falls back below the predetermined threshold (S), the number (N) of landings or of takeoffs is incremented.

2. Method according to the preceding claim, the regular interval of time (Δt) separating two successive measurements is substantially equal to 10 seconds.

3. Method according to any one of the preceding claims, in which the measurements of the temperature or the pressure at regular intervals are stopped when the stop of rotation of a tyre (10) is detected.

4. Device (22) for counting the number (N) of landings or of takeoffs of an aircraft tyre (10), **characterized in that** it comprises:
- means (32) for detecting an initiation of the rotation of the tyre and means (51) for activating the measurement means (34) activatable by the detection means (32);
- discontinuous means (34) for measuring the temperature or the pressure of the air contained inside of the tyre (10) at regular intervals of time;
- means (52) for determining an indicator (I) relating to the variation of the temperature or pressure on the regular interval of time (Δt) by the equation I(t+Δt)= (T(t+Δt)-T(t))/Δt;
- means (56) for comparing the indicator (I) with a predetermined threshold (S) associated with the tyre (10), and
- means (58) for incrementing the number of landings and of takeoffs (N), when the indicator (I) is greater than the predetermined threshold (S) associated with the tyre (10) then falls back below the predetermined threshold (S).

5. Device (22) according to Claim 4, in which the measurement means (34) for measuring the temperature or the pressure are activated substantially every 10 seconds during a time period between the initiation and the stop of the rotation of the tire (10).

6. Tyre (10), **characterized in that** it comprises a device (22) according to either one of Claims 4 and 5.

7. Aircraft wheel, **characterized in that** it comprises a device (22) according to either one of Claims 4 and 5.

8. Aircraft, **characterized in that** it comprises a tyre (10) according to Claim 6 or a wheel according to Claim 7.

9. Valve, **characterized in that** it comprises a device (22) according to either one of Claims 4 and 5.
